# EUROPEAN PATENT APPLICATION

(11) **EP 2 354 887 A2**
(43) Date of publication of application: **10.08.2011**
(21) Application number: 11000747.3
(22) Date of filing: 31.01.2011
(51) Int. Cl.: G06F 1/16

(54) **Waveguide assembly and applications thereof**

(30) Priority: 05.02.2010 US 301966 P; 05.04.2010 US 321007 P; 18.08.2010 US 858653
(71) Applicant: Broadcom Corporation, Irvine, CA 92617 (US)
(72) Inventor: Hansen, Christopher, J., Sunnyvale CA 94087 (US); Trachewsky, Jason, A., Menlo Park CA 94025 (US); Mucenieks, Lance, Boulder Creek CA 95006 (US)
(74) Representative: Jehle, Volker Armin

(57) **Abstract**

A device includes a first section, a second section, a hinge section, an antenna, a radiowave transceiver section, and a waveguide assembly. The hinge section couples the first section to the second section and allows the first section to be pivoted with respect to the second section. The antenna is located within the first section and the radio wave transceiver section is located in the second section. The waveguide assembly provides coupling through at least a portion of the first section, at least a portion of the second section, and the hinge section such that the antenna is electrically coupled to the radio wave transceiver section.

## Description

### CROSS REFERENCE TO RELATED PATENTS

This patent application is claiming priority under 35 USC § 119(e) to:
1. a provisionally filed patent application entitled ANTENNA ROUTING SYSTEM FOR A HINGED DEVICE, having a provisional filing date of 02/05/2010, and a provisional serial number of 61/301,966 (BP21690); and
2. a provisionally filed patent application entitled 60 GHz FLEXIBLE WAVEGUIDE, having a provisional filing date of 04/05/2010, and a provisional serial number of 61 /321,007 (BP21805).

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC - NOT APPLICABLE

### BACKGROUND OF THE INVENTION

### TECHNICAL FIELD OF THE INVENTION

This invention relates generally to radio wave communications and more particularly to routing radio waves within a device.

### DESCRIPTION OF RELATED ART

Many of today's portable electronic devices include a radio wave transceiver for connecting to a wireless local area network (WLAN), a cellular data network, a personal area network, and/or other wireless-type communication networks. For example, a laptop computer includes a WLAN transceiver, a Bluetooth transceiver, and may further include a cellular data network transceiver (or have one coupled to a port of the laptop). With today's wireless LAN, Bluetooth, and cellular data network frequencies (e.g., 900 MHz, 1800 MHz, 2.4 GHz, 5 GHz), the placement of one or more antennas within the laptop computer is primarily determined for convenience of manufacture, with moderate to little consideration for wireless communication performance.

As the frequency of RF communications increases (e.g., 60 GHz), the positioning of one or more antennas within a device becomes more critical. For instance, within a laptop computer, it is desirable to place one or more antennas within the display portion of the laptop computer to enhance wireless communication performance. The radio transceiver, however, is located proximal to the motherboard, which is typically in the keyboard section of the laptop. As such, coupling the one or more antennas to the radio transceiver is not a trivial task.

### BRIEF SUMMARY OF THE INVENTION

The present invention is directed to apparatus and methods of operation that are further described in the following Brief Description of the Drawings, the Detailed Description of the Invention, and the claims.

According to an aspect of the invention, a device comprises:
a first section;
a second section;
a hinge section that couples the first section to the second section and allows the first section to be pivoted with respect to the second section;
an antenna located within the first section;
a radio wave transceiver section located in the second section; and
a waveguide assembly operable to provide coupling through at least a portion of the first section, at least a portion of the second section, and the hinge section such that the antenna is electrically coupled to the radio wave transceiver section.

Advantageously, the device further comprises:
a plurality of antennas that includes the antenna; and
a plurality of waveguide assemblies that includes the waveguide assembly, wherein the plurality of waveguide assemblies provides coupling through the at least a portion of the first section, the at least a portion of the second section, and the hinge section such that the plurality of antennas is electrically coupled to the radio wave transceiver section.

Advantageously, the radio wave transceiver comprises:
compensation circuitry to compensate for impedance variations of one or more of the plurality of waveguide assemblies and/or impedance variations of one or more of the plurality of antennas.

Advantageously, the device further comprises:
a laptop computer where a display is located in the first section and a keyboard and motherboard are located in the second section;
a physical layer transceiver module located in the second section, wherein the physical layer transceiver module is operably coupled to the radiowave transceiver; and
a media access control (MAC) layer transceiver module located in the second section, wherein the MAC layer transceiver module is operably coupled to the physical layer transceiver module and is operably coupled to a bus structure of the motherboard.

Advantageously, the waveguide assembly comprises:
a first waveguide operably coupled to the antenna, wherein the first waveguide is located within the first section;
a second waveguide operably coupled to the radio wave transceiver section, wherein the second waveguide is located in the second section; and
a flexible microstrip coupling the first waveguide to the second waveguide, wherein the flexible microstrip is located in the hinge section.

Advantageously, the device further comprises:
a housing that includes the antenna integrated therein;
the waveguide assembly further including:
   a first transition coupler that couples the antenna to the first waveguide;
   a second transition coupler that couples the second waveguide to the radio wave transceiver.

Advantageously, the waveguide assembly further comprises:
a first transition coupled for coupling a first end of the flexible microstrip to the first waveguide; and
a second transition coupler for coupling a second end of the flexible microstrip to the second waveguide.

Advantageously, the waveguide assembly further comprises at least one of:
the first and second waveguides having a rigid structure; and
the first and second waveguides having a flexible structure.

According to a further aspect, a waveguide assembly comprises:
a first waveguide for coupling to an antenna, wherein the antenna is located within a first section of a housing;
a second waveguide for coupling to a radiowave transceiver section, wherein the radiowave transceiver section is located in a second section of the housing; and
a flexible microstrip coupling the first waveguide to the second waveguide, wherein the flexible microstrip is located in a hinge section of the housing.

Advantageously, the waveguide assembly further comprises:
a first transition coupler that couples the antenna to the first waveguide; and
a second transition coupler that couples the second waveguide to the radio wave transceiver.

Advantageously, the waveguide assembly further comprises:
a first transition coupler for coupling a first end of the flexible microstrip to the first waveguide; and
a second transition coupler for coupling a second end of the flexible microstrip to the second waveguide.

Advantageously, the waveguide assembly further comprises at least one of:
the first and second waveguides having a rigid structure; and
the first and second waveguides having a flexible structure.

According to an aspect, a waveguide comprises:
a transmission line section having a geometric shaped cross-section;
a transition section connected to the transmission line section, wherein the transition section has a non-uniformed geometric shaped cross-section comparable to the geometric shaped cross-section, wherein the non-uniformed geometric shaped cross-section facilitates impedance transformation; and
a coupling section connected to the transition section, wherein the coupling section has a mating geometric shaped cross-section.

Advantageously, the waveguide further comprises:
a second transition section connected to a second end of the transmission line section, wherein the second transition section has the non-uniformed geometric shaped cross-section; and
a second coupling section connected to the second transition section, wherein the second coupling section has the mating geometric shaped cross-section.

Advantageously, the waveguide further comprises:
each of the transmission line section, the transition section, and the coupling section including a dielectric core and a conductor plating at least partially encasing the dielectric.

Advantageously, the waveguide further comprises:
the dielectric core including at least one of a flexible solid material and a semi-solid material; and
the conductive plating including at least one of: a continuous conductor, a braided type conductor, and a series of conductors.

Advantageously, the waveguide further comprises:
the dielectric core including a material having a low loss at 60 GHz; and
the transmission line section, the transition section, and the coupling section, having dimensions to facilitate carrying radiowave signals in the 60 GHz frequency range.

Other features and advantages of the present invention will become apparent from the following detailed description of the invention made with reference to the accompanying drawings.

### BRIEF DESCRIPTION OF THE SEVERAL VIEWS OF THE DRAWING(S)

Figure 1 is a diagram of an embodiment of a device in accordance with the present invention;
Figure 2 is a diagram of another embodiment of a device in accordance with the present invention;
Figure 3 is a schematic block diagram of an embodiment of a wireless communication unit in accordance with the present invention;
Figure 4 is a schematic block diagram of an embodiment of a portion of an antenna structure in accordance with the present invention;
Figure 5 is a schematic block diagram of an embodiment of a wireless communication unit in accordance with the present invention;
Figure 6 is a schematic block diagram of another embodiment of a wireless communication unit in accordance with the present invention;
Figure 7 is a schematic block diagram of another embodiment of a wireless communication unit in accordance with the present invention;
Figure 8 is a schematic block diagram of another embodiment of a wireless communication unit in accordance with the present invention;
Figure 9 is a schematic block diagram of another embodiment of a wireless communication unit in accordance with the present invention;
Figure 10 is a diagram of an embodiment of a flexible waveguide in accordance with the present invention;
Figure 11 is a cross-sectional diagram of an embodiment of a flexible waveguide in accordance with the present invention;
Figure 12 is a cross-sectional diagram of another embodiment of a flexible waveguide in accordance with the present invention;
Figure 13 is a cross-sectional diagram of another embodiment of a flexible waveguide in accordance with the present invention;
Figure 14 is a cross-sectional diagram of another embodiment of a flexible waveguide in accordance with the present invention; and
Figure 15 is a diagram of a specific embodiment of a flexible waveguide in accordance with the present invention.

### DETAILED DESCRIPTION OF THE INVENTION

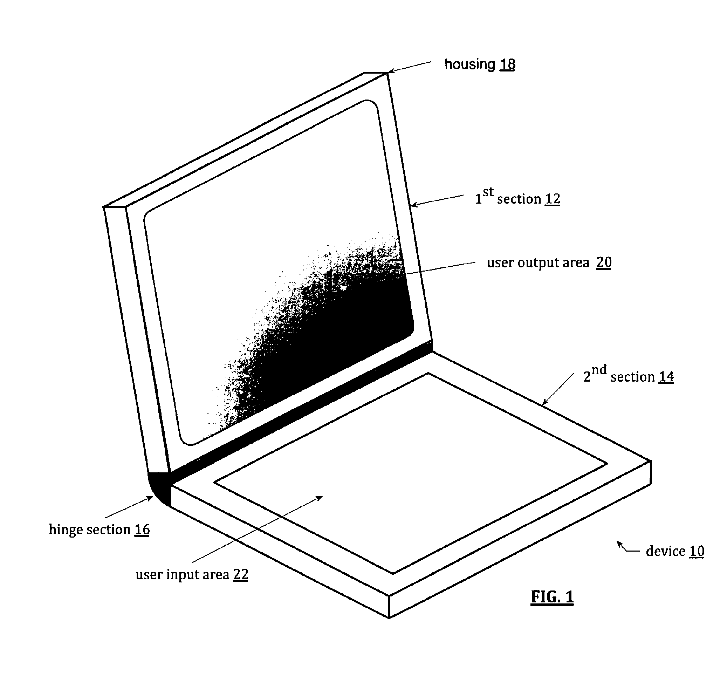

Figure 1 is a diagram of an embodiment of a device 10 that includes a first section 12, a second section 14, and a hinge section 16. The hinge section 16 mechanically and electrically connects the first section 12 to the second section 14. For example, the device 10 may be a laptop computer, a video game unit, a cellular telephone, a personal media player, etc., where the first section 12 includes a user output area 20 (e.g., a display) and the second section 14 includes a user input area 22 (e.g., a keyboard). The hinge section 16 includes a mechanical hinge to enable the first section 12 to be positioned at an angle of 0° to over 180° with respect to the second section 14.

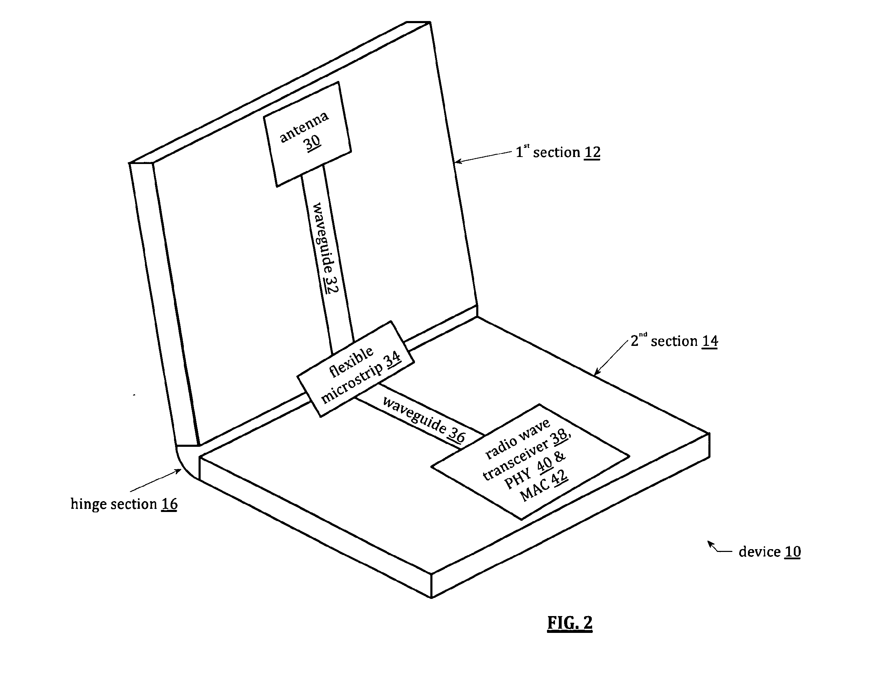

Figure 2 is a diagram of another embodiment of a device 10 that includes the first section 12, the second section 14, and the hinge section 16. The device 10 further includes at least one wireless communication device, which may be compliant with one or more wireless communication standards (e.g., GSM, CDMA, WCDMA, HSUPA, HSDPA, WiMAX, EDGE, GPRS, IEEE 802.11, Bluetooth, ZigBee, universal mobile telecommunications system (UMTS), long term evolution (LTE), IEEE 802.16, evolution data optimized (EV-DO), proprietary protocol, etc.).

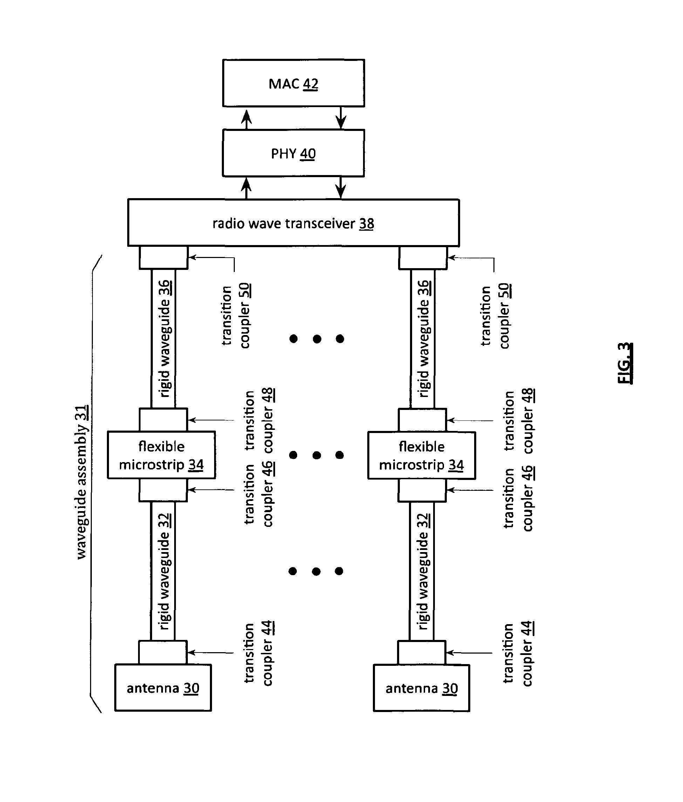

The wireless communication unit includes one or more antennas 30, a radio wave transceiver 38, a physical layer (PHY) module 40, and a media access control (MAC) layer module 42. The one or more antennas 30 are coupled to the radio wave transceiver 38 via a first rigid waveguide 32, a flexible microstrip and/or waveguide 34, a second rigid waveguide 36, and a plurality of transition couplers (shown in Figure 3). The one or more antennas 30 and the first rigid waveguide 32 are within the first section 12 of the device 10; the flexible microstrip and/or waveguide 34 is within the hinge section 16 of the device 10; and the second rigid waveguide 36, the radio wave transceiver 38, the PHY module 40, and the MAC module 42 are within the second section 14 of the device 10.

The first rigid waveguide 32 may be a separate component that is mounted within the first section 12 of the device 10; it may be cast within the first section 12 of the device 10; or a combination thereof. The first rigid waveguide 32 may be composed of a conductive metal (e.g., copper, aluminum, gold, etc.) and have a geometric shape (e.g., circular tube, square tube, rectangular tube, oval tube, etc.). Alternatively, the first rigid waveguide 32 may be composed of a non-conductive material (e.g., plastic, etc.) having a metal coating. Note that the first rigid waveguide 32 is substantially linear, but may include a slight bend (e.g., up to 45°) to accommodate physical constraints of the first section of the device 10. Further note that the first rigid waveguide 32 may include multiple waveguide sections coupled together. Still further note that the antenna may be integrated into a housing of the wireless communication unit. For example, the antenna may be molded into the housing of the first section, may be fitted into a molded section of the housing, and/or may be fabricated in the housing as part of the manufacture of the first section.

Similarly, the second rigid waveguide 36 may be a separate component that is mounted within the second section 14 of the device 10; it may be cast within the second section 14 of the device 10; or a combination thereof. The second rigid waveguide 36 may be composed of a conductive metal (e.g., copper, aluminum, gold, etc.) and have a geometric shape (e.g., circular tube, square tube, rectangular tube, oval tube, etc.). Alternatively, the second rigid waveguide 36 may be composed of a non-conductive material (e.g., plastic, etc.) having a metal coating. Note that the second rigid waveguide 36 is substantially linear, but may include a slight bend (e.g., up to 45°) to accommodate physical constraints of the second section 14 of the device 10. Further note that the second rigid waveguide 36 may include multiple waveguide sections coupled together.

The flexible microstrip and/or waveguide 34 may be a separate component that is mounted within the hinge section 16 of the device 10; may be fabricated as part of the electrical connectivity of the hinge section 16; or a combination thereof. For example, the flexible microstrip and/or waveguide 34 includes a microstrip fabricated on a flexible substrate (e.g., Kapton substrate). Alternatively, or in addition to the previous example, the flexible microstrip and/or waveguide 34 includes a coplanar waveguide fabricated on a flexible substrate. Alternatively, or in addition to one or more of the previous examples, the flexible microstrip and/or waveguide 34 includes a flexible waveguide having a geometric shape.

In general, the radio wave transceiver 38 includes a receiver section and a transmitter section and operates in one or more of the following ISM bands and/or in the 60 GHz band (e.g., 56 - 64 GHz). The ISM bands of operation include one or more of the following:

| | |
|---|---|
| 24-24.25 GHz | 24.125 GHz |
| 61-61.5 GHz | 61.25 GHz |
| 122-123 GHz | 122.5 GHz |
| 244-246 GHz | 245 GHz |

The radio wave transceiver 38, the PHY module 40, and the MAC module 48 will be described in greater detail with references to one or more of Figures 3-8.

Figure 3 is a schematic block diagram of an embodiment of a wireless communication unit that includes an antenna structure, a radio wave transceiver 38 (e.g., transmitter section and a receiver section), a PHY module 40, and a MAC module 42. The antenna structure includes one or more antennas 30 and one or more waveguide assemblies 31, wherein a waveguide assembly 31 includes a first rigid waveguide 32, a flexible microstrip and/or waveguide 34, a second rigid waveguide 36, and a plurality of transition couplers 44-50.

In an example of operation, the MAC module 42 converts outbound data (e.g., voice, text, audio, video, graphics, etc.) into PHY layer data and the PHY module 40 converts the PHY layer data into an outbound symbol stream in accordance with one or more wireless communication standards (e.g., GSM, CDMA, WCDMA, HSUPA, HSDPA, WiMAX, EDGE, GPRS, IEEE 802.11, Bluetooth, ZigBee, universal mobile telecommunications system (UMTS), long term evolution (LTE), IEEE 802.16, evolution data optimized (EV-DO), proprietary protocol, etc.). Such a PHY layer conversion includes one or more of: scrambling, puncturing, encoding, interleaving, constellation mapping, modulation, frequency spreading, frequency hopping, beamforming, space-time-block encoding, space-frequency-block encoding, frequency to time domain conversion, and/or digital baseband to intermediate frequency conversion.

The transmitter section 38 converts the outbound symbol stream into an outbound RF signal that has a carrier frequency within a given frequency band (e.g., ISM bands 36). In an embodiment, this may be done by mixing the outbound symbol stream with a local oscillation to produce an up-converted signal. One or more power amplifiers and/or power amplifier drivers amplifies the up-converted signal, which may be RF bandpass filtered, to produce the outbound RF signal. In another embodiment, the transmitter section 38 includes an oscillator that produces an oscillation. The outbound symbol stream provides phase information (e.g., +/- Δθ [phase shift] and/or θ(t) [phase modulation]) that adjusts the phase of the oscillation to produce a phase adjusted RF signal, which is transmitted as the outbound RF signal. In another embodiment, the outbound symbol stream includes amplitude information (e.g., A(t) [amplitude modulation]), which is used to adjust the amplitude of the phase adjusted RF signal to produce the outbound RF signal.

In yet another embodiment, the transmitter section 38 includes an oscillator that produces an oscillation. The outbound symbol provides frequency information (e.g., +/Δf [frequency shift] and/or f(t) [frequency modulation]) that adjusts the frequency of the oscillation to produce a frequency adjusted RF signal, which is transmitted as the outbound RF signal. In another embodiment, the outbound symbol stream includes amplitude information, which is used to adjust the amplitude of the frequency adjusted RF signal to produce the outbound RF signal. In a further embodiment, the transmitter section 38 includes an oscillator that produces an oscillation. The outbound symbol provides amplitude information (e.g., +/- ΔA [amplitude shift] and/or A(t) [amplitude modulation) that adjusts the amplitude of the oscillation to produce the outbound RF signal.

The transmitter section 38 provides the outbound RF signal to the second rigid waveguide via a first transition coupler 50. The second rigid waveguide 36 conducts the outbound RF signal to the flexible microstrip and/or waveguide 34 via a second transition coupler48. The flexible microstrip and/or waveguide 34 conducts the outbound RF signal to the first waveguide 32 via a third transition coupler 46. The first rigid waveguide 32 conducts the outbound RF signal to the antenna(s) 30 via a fourth transition coupler 44. The antenna(s) 30 transmit the outbound RF signal.

On the receive side, the antenna(s) 30 receive an inbound RF signal and provides to the first rigid waveguide 32 via the fourth transition coupler 44. The first rigid waveguide 32 conducts the inbound RF signal to the flexible microstrip and/or waveguide 34 via the third transition coupler 46. The flexible microstrip and/or waveguide 34 conducts the inbound RF signal to the second rigid waveguide 36 via the second transition coupler 48. The second rigid waveguide 36 conducts the inbound RF signal to the receiver section 38 via the first transition coupler 50.

The receiver section 38 amplifies the inbound RF signal to produce an amplified inbound RF signal. The receiver section 38 may then mix in-phase (I) and quadrature (Q) components of the amplified inbound RF signal with in-phase and quadrature components of a local oscillation to produce a mixed I signal and a mixed Q signal. The mixed I and Q signals are combined to produce an inbound symbol stream. In this embodiment, the inbound symbol may include phase information (e.g., +/- Δθ [phase shift] and/or θ(t) [phase modulation]) and/or frequency information (e.g., +/- Δf [frequency shift] and/or f(t) [frequency modulation]). In another embodiment and/or in furtherance of the preceding embodiment, the inbound RF signal includes amplitude information (e.g., +/- ΔA [amplitude shift] and/or A(t) [amplitude modulation]). To recover the amplitude information, the receiver section 38 includes an amplitude detector such as an envelope detector, a low pass filter, etc.

The PHY module 40 converts the inbound symbol stream into inbound PHY data in accordance with one or more wireless communication standards (e.g., GSM, CDMA, WCDMA, HSUPA, HSDPA, WiMAX, EDGE, GPRS, IEEE 802.11, Bluetooth, ZigBee, universal mobile telecommunications system (UMTS), long term evolution (LTE), IEEE 802.16, evolution data optimized (EV-DO), etc.). Such a conversion may include one or more of: digital intermediate frequency to baseband conversion, time to frequency domain conversion, space-time-block decoding, space-frequency-block decoding, demodulation, frequency spread decoding, frequency hopping decoding, beamforming decoding, constellation demapping, deinterleaving, decoding, depuncturing, and/or descrambling. The MAC module 42 converts the inbound PHY data into inbound data (e.g., voice, text, audio, video, graphics, etc.).

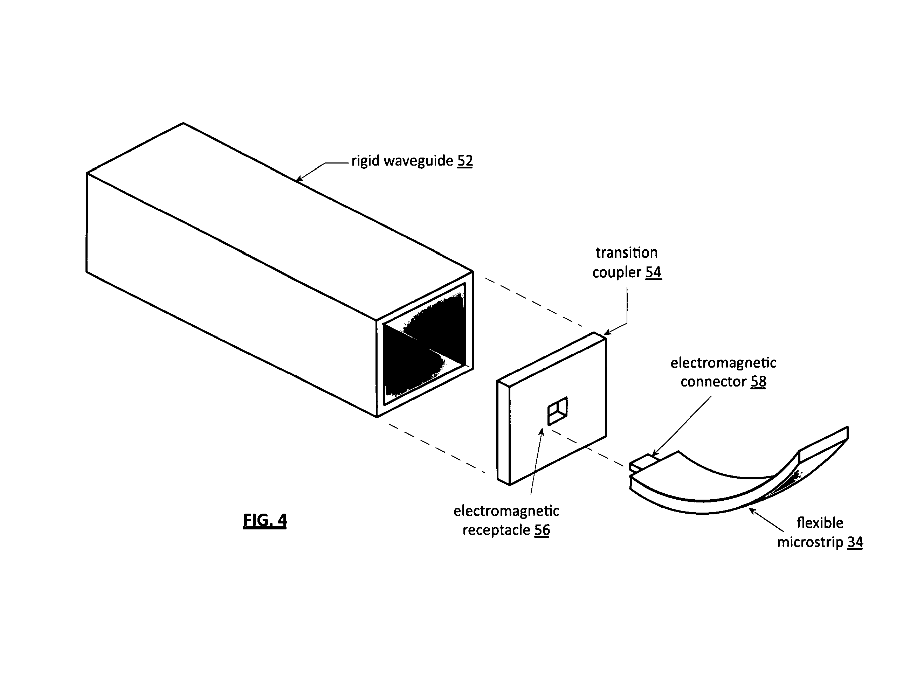

Figure 4 is a schematic block diagram of an embodiment of a portion of an antenna structure (i.e., a portion of a waveguide assembly 31) that includes a rigid waveguide 52 (e.g., first or second), a transition coupler 54, and a flexible microstrip 34 (and/or waveguide). In this illustration, the rigid waveguide 52 includes a square tubular shape, but could include a different geometric shape (e.g., circular, elliptical, rectangular, triangular, etc.). While not shown, the rigid waveguide 52 further includes a mechanical flange or other mechanism for creating a physical and electrical connection to the transition coupler.

The transition coupler 54 includes an electrical receptacle 56 (and/or electrical connector 58) to provide an electrical connection between the rigid waveguide 52 and the flexible microstrip 34. The transition coupler 54 also includes a mechanism for physical coupling (e.g., flange, threaded coupler, etc.) to the rigid waveguide 52 and/or to the flexible microstrip 34. Note that the electrical coupling may also provide the mechanical physical coupling. The other transition couplers (e.g., between the antenna and the first rigid waveguide and between the second rigid waveguide and the radio wave transceiver) have similar electrical and mechanical properties as the present transition coupler 54.

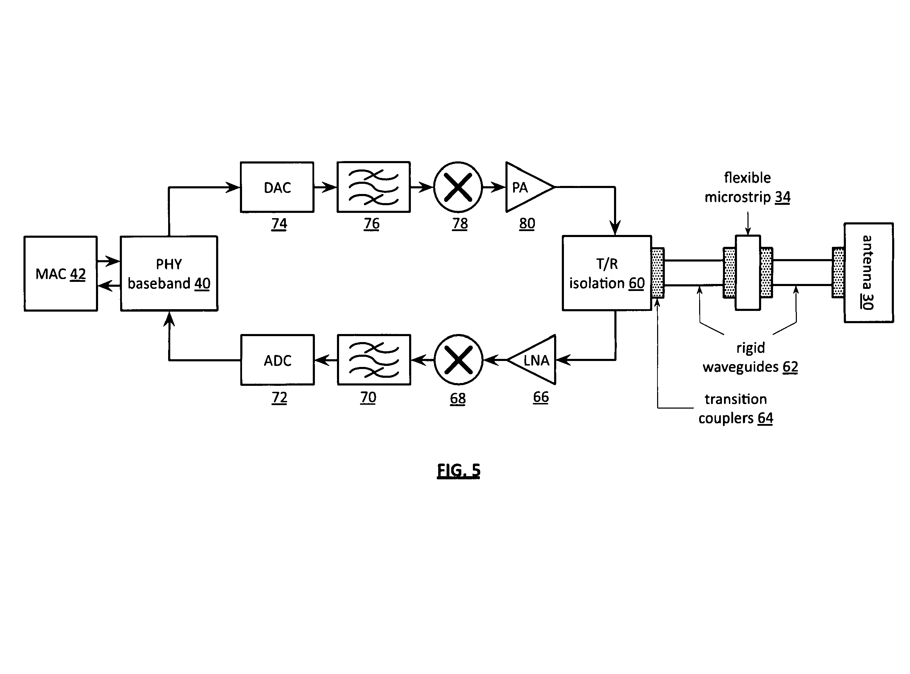

Figure 5 is a schematic block diagram of an embodiment of a wireless communication unit that includes the MAC module 42, the PHY module 40, the radio wave transceiver, a transmit/receive isolation module 60 (e.g., T/R switch, a circulator, an isolator, etc.), and an antenna structure. The radio wave transceiver includes a receiver section and a transmitter section. The receiver section includes one more low noise amplifiers 66, a down-conversion mixing module 68, a filtering module 70, and an analog to digital converter (ADC) 72. The transmitter section includes a digital to analog converter (DAC) 74, a filtering module 76, an up-conversion mixing module 78, and one or more power amplifiers 80. The MAC module 42, PHY module 40, and the radio wave transceiver function as previously described.

The antenna structure includes an antenna 30, rigid waveguides 62, a flexible microstrip and/or waveguide 34, and transition couplers 64. The antenna structure may further include an impedance matching circuit if the impedance of the rigid waveguides 62, a flexible microstrip and/or waveguide 34, and transition coupler 64 does not substantially match the impedance of the antenna 30.

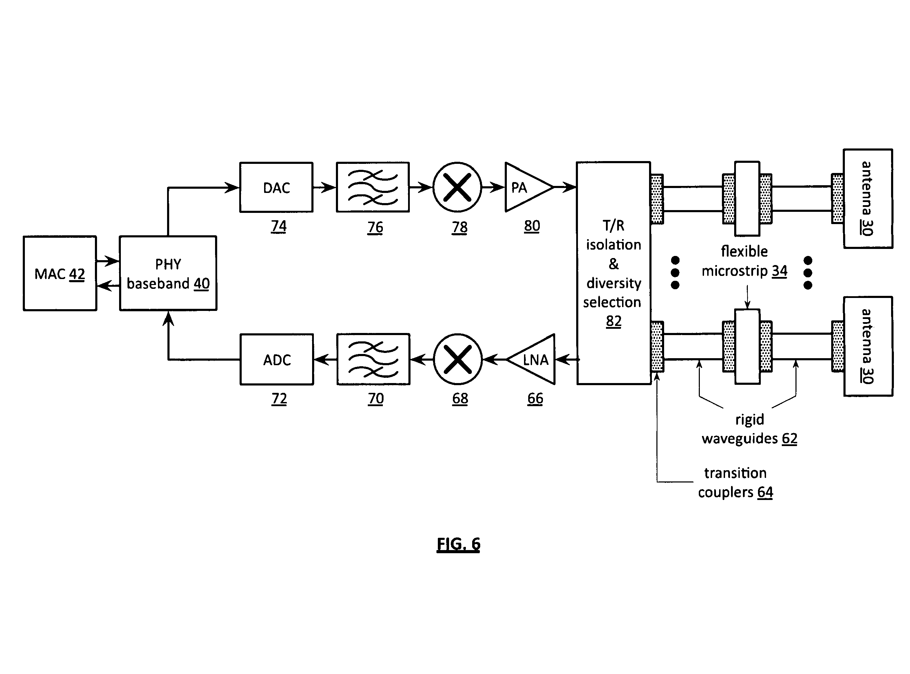

Figure 6 is a schematic block diagram of another embodiment of a wireless communication unit that includes the MAC module 42, the PHY module 40, the radio wave transceiver, a transmit/receive isolation & diversity selection module 82, and a plurality of antenna structures. The radio wave transceiver includes a receiver section and a transmitter section. The receiver section includes one more low noise amplifiers 66, a down-conversion mixing module 68, a filtering module 70, and an analog to digital converter (ADC) 72. The transmitter section includes a digital to analog converter (DAC) 74, a filtering module 76, an up-conversion mixing module 78, and one or more power amplifiers 80. The MAC module 42, PHY module 40, and the radio wave transceiver function as previously described.

The T/R isolation & diversity selection module 82 functions to select one of the antenna assemblies. Such a select may be based on signal strength, signal to noise ratio, signal to interference ratio, etc. The T/R isolation & diversity selection module 82 may further include compensation circuitry to adjust for mismatches between antenna sections (e.g., different impedances, different quality factors, different frequency responses, etc.).

Each of the antenna structure includes an antenna 30, rigid waveguides 62, a flexible microstrip and/or waveguide 34, and transition couplers 64. The antenna structure may further include an impedance matching circuit if the impedance of the rigid waveguides 62, a flexible microstrip and/or waveguide 34, and transition coupler 64 does not substantially match the impedance of the antenna 30.

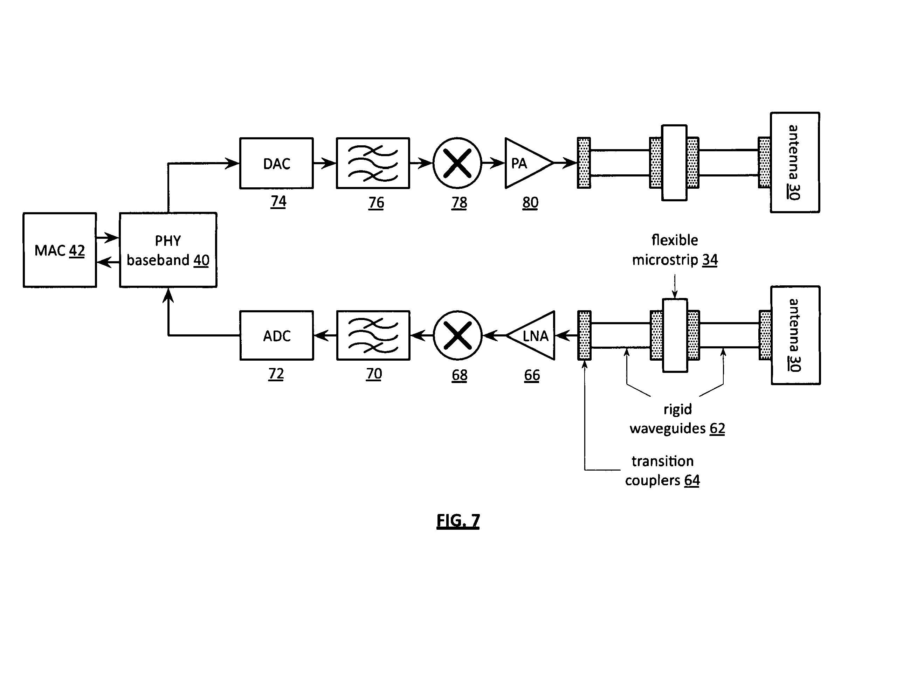

Figure 7 is a schematic block diagram of another embodiment of a wireless communication unit that includes the MAC module 42, the PHY module 40, the radio wave transceiver, a transmit antenna structure and a receive antenna structure. The radio wave transceiver includes a receiver section and a transmitter section. The receiver section includes one more low noise amplifiers 66, a down-conversion mixing module 68, a filtering module 70, and an analog to digital converter (ADC) 72. The transmitter section includes a digital to analog converter (DAC) 74, a filtering module 76, an up-conversion mixing module 78, and one or more power amplifiers 80. The MAC module 42, PHY module 40, and the radio wave transceiver function as previously described.

Each of the antenna structure includes an antenna 30, rigid waveguides 62, a flexible microstrip and/or waveguide 34, and transition couplers 64. The antenna structure may further include an impedance matching circuit if the impedance of the rigid waveguides 62, a flexible microstrip and/or waveguide 34, and transition coupler 64 does not substantially match the impedance of the antenna 30.

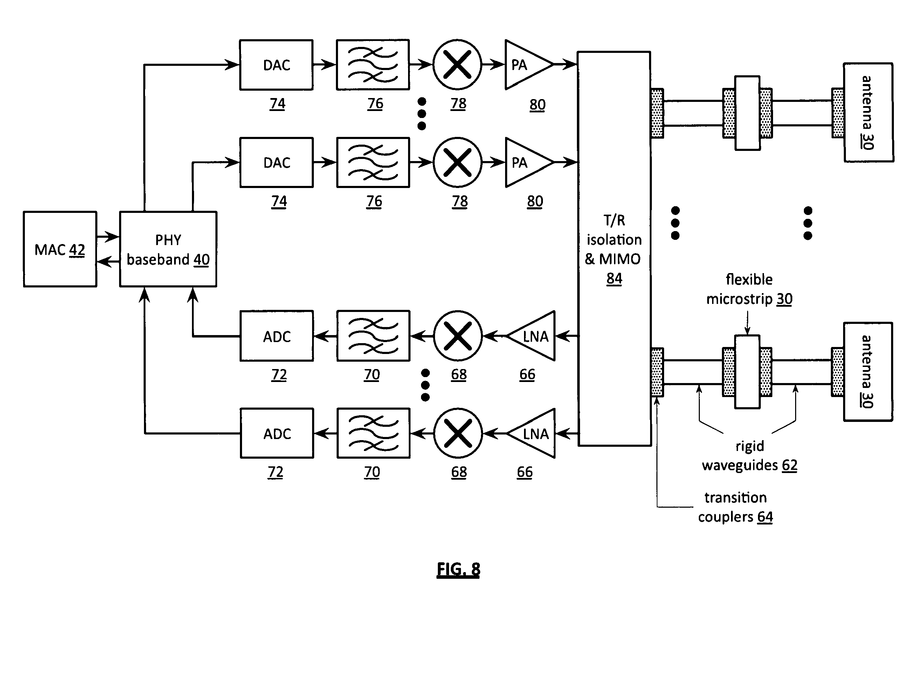

Figure 8 is a schematic block diagram of another embodiment of a wireless communication unit that includes the MAC module 42, the PHY module 40, the radio wave transceiver, a transmit/receive isolation & MIMO (multiple input multiple output) module 84, and a plurality of antenna structures. The radio wave transceiver includes a plurality of receiver sections and a plurality of transmitter sections. Each of the receiver section includes one more low noise amplifiers 66, a down-conversion mixing module 68, a filtering module 70, and an analog to digital converter (ADC) 72. Each of the transmitter section includes a digital to analog converter (DAC) 74, a filtering module 76, an up-conversion mixing module 78, and one or more power amplifiers 80.

The MAC module 42 and PHY module 40 function to convert outbound data into a plurality of outbound symbol streams and to convert a plurality of inbound symbol streams into inbound data in accordance with one or more wireless communication standards. Each of the transmitter sections converts a corresponding one of the plurality of outbound symbol streams into an outbound RF signal. Each of the receiver sections converts a corresponding inbound RF signal into one of the plurality of inbound symbol streams.

The T/R isolation and MIMO module 84 provides the outbound RF signals to corresponding antenna structures when the transceiver is in a transmit mode. The T/R isolation and MIMO module 84 receives the inbound RF signals form the antenna structures and provides the inbound RF signals to corresponding ones of the receiver sections.

Each of the antenna structure includes an antenna 30, rigid waveguides 62, a flexible microstrip and/or waveguide 34, and transition couplers 64. The antenna structure may further include an impedance matching circuit if the impedance of the rigid waveguides 62, a flexible microstrip and/or waveguide 62, and transition coupler 64 does not substantially match the impedance of the antenna 30.

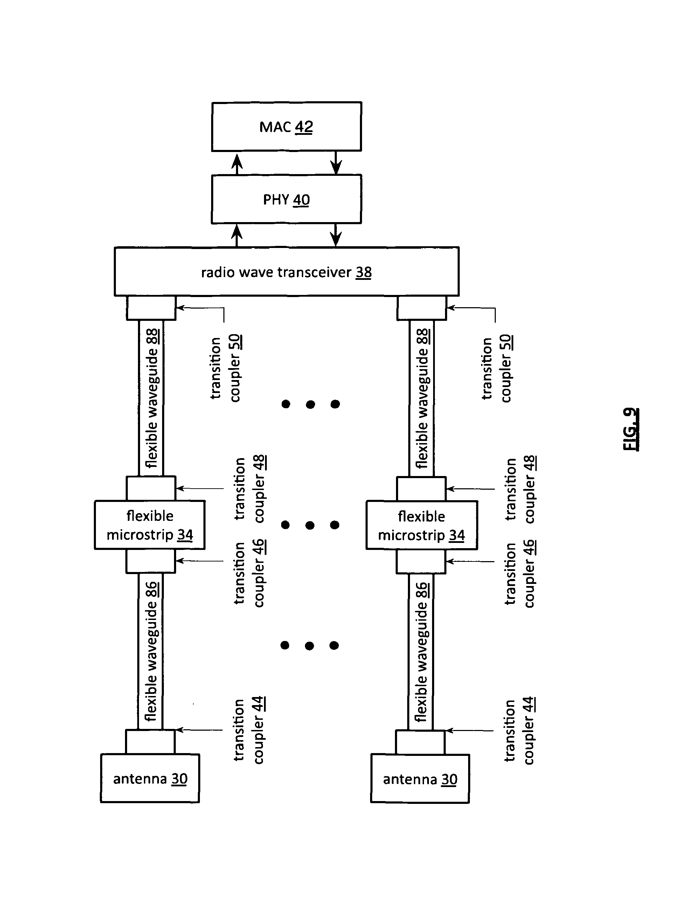

Figure 9 is a schematic block diagram of another embodiment of a wireless communication unit that includes an antenna structure, a radio wave transceiver 38 (e.g., transmitter section and a receiver section), a PHY module 40, and a MAC module 42. The antenna structure includes one or more antennas 30, a first rigid waveguide, a flexible microstrip and/or waveguide 34, a second rigid waveguide, and a plurality of transition couplers 44-50. This wireless communication unit functions similarly to the wireless communication unit described with reference to Figure 3 with the exception that the rigid waveguides are replaced with flexible waveguides 86-88. Note that a combination of flexible and rigid waveguides may be used to facilitate the coupling of the antennas 30 to the radio wave transceiver 38.

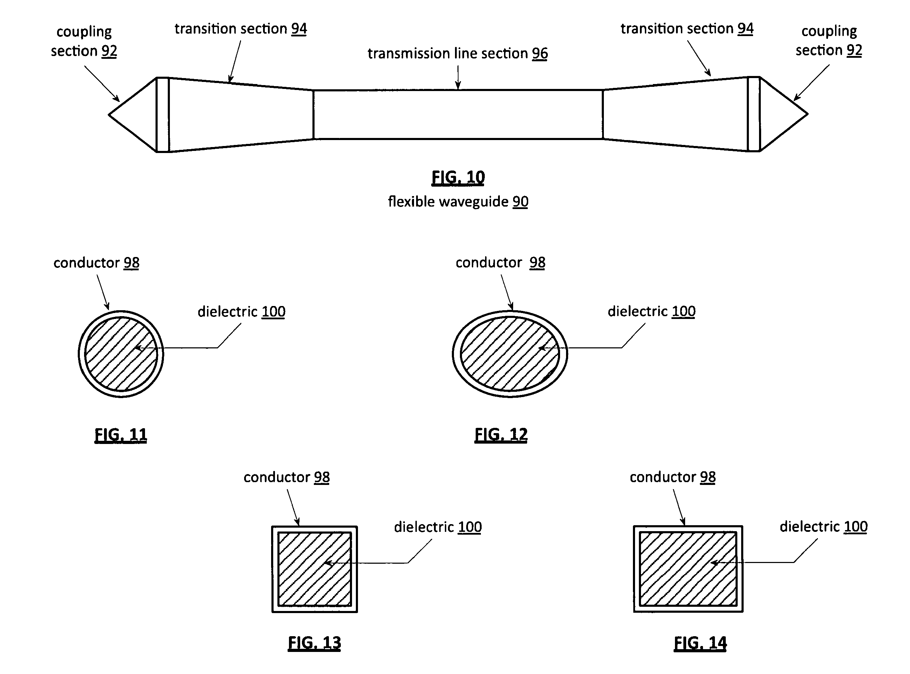

Figure 10 is a diagram of an embodiment of a flexible waveguide 90 that includes a transmission line section 96, transition sections 94, and coupling sections 92. As will be described further with reference to Figures 11-14, the flexible waveguide 90 includes a dielectric core and a conductive plating. The dielectric core may include a flexible solid or semi-solid material that has relatively low loss at 60 GHz. For example, a synthetic fluorpolymer of tetrafluoroethylene, other fluorocarbons, etc. may be used for the dielectric core material. The conductive plating may include a continuous conductor encasing the transmission line section 96 and the transition sections 94, may include a braided type conductor encasing the transmission line section 96 and the transition sections 94, or a series of conductors at least partially encasing the transmission line section 96 and the transition sections 94. For example, the conductor may be copper, gold, aluminum, and/or any other electrically conductive metal.

In an example, the coupling sections 92 provide connectivity for the dielectric core to the transition couplers. The shape of the coupling sections 92 may be conical for circular or elliptical cross-sections of the transition section 94, pyramid for square or rectangular cross-sections of the transition section 94, or other shape that mates with a receptacle shape of the transition couplers. Alternatively, one or both of the coupling sections 92 may include a female version of the mating receptacle of the transition coupler. For example, the transition coupler may include the male conical shaped coupler and the coupling section includes a female conical shaped coupler.

The coupler sections 92 provide an RF or MMW signal to the transition section 94 of the flexible waveguide 90. The length and angular shape of the transition sections 94 are selected to provide a desired impedance transformation. As such, the transition sections 94 provide impedance matching between the transition coupler and the transmission line. The transmission line section 96 propagates the RF or MMW signal from one transition section 94 to the other with minimal loss.

Figure 11 is a cross-sectional diagram of an embodiment of the flexible waveguide 90 of Figure 10. In this illustration, the flexible waveguide 90 includes a circular dielectric core 100 and a circular conductor 98 that provides the conductive plating. The transmission line 96 and/or the transition sections 94 may have this cross-sectional shape.

Figure 12 is a cross-sectional diagram of another embodiment of the flexible waveguide 90 of Figure 10. In this illustration, the flexible waveguide 90 includes an elliptical dielectric core 100 and an elliptical conductor 98 that provides the conductive plating. The transmission line 96 and/or the transition sections 94 may have this cross-sectional shape.

Figure 13 is a cross-sectional diagram of another embodiment of the flexible waveguide 90 of Figure 10. In this illustration, the flexible waveguide 90 includes a square dielectric core 100 and a square conductor 98 that provides the conductive plating. The transmission line 96 and/or the transition sections 94 may have this cross-sectional shape.

Figure 14 is a cross-sectional diagram of another embodiment of the flexible waveguide 90 of Figure 10. In this illustration, the flexible waveguide 90 includes a rectangular dielectric core 100 and a rectangular conductor 98 that provides the conductive plating. The transmission line 96 and/or the transition sections 94 may have this cross-sectional shape. While Figures 11-14 illustrate various cross-sections for the flexible waveguide 90, they are not exhaustive of the cross-sectional shapes and other shapes may be used. Further, the transmission line 96 may have one type of cross-sectional shape and one or more of the transition sections 94 may have a different type of cross-sectional shape.

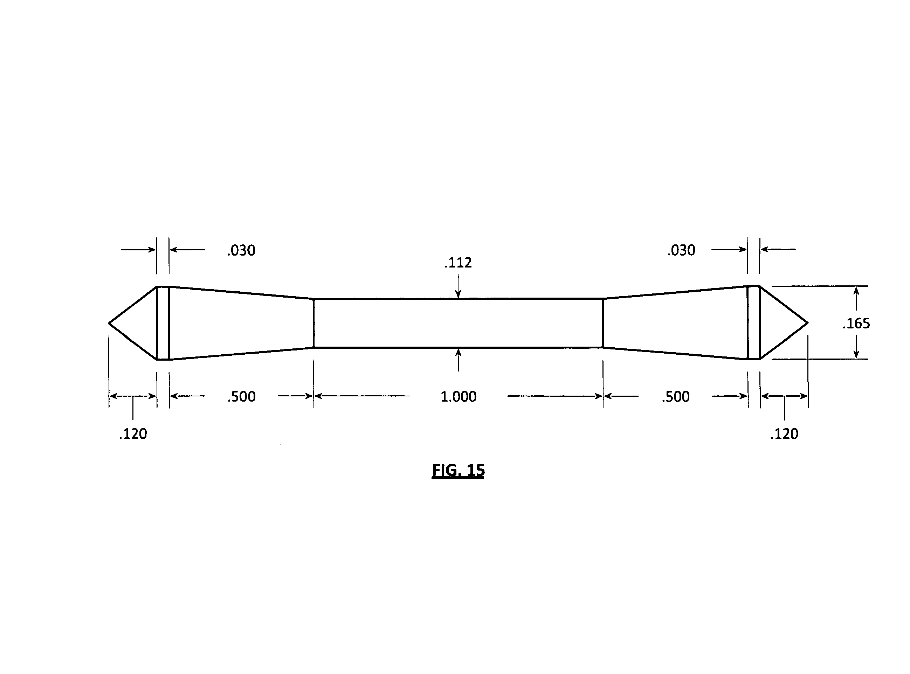

Figure 15 is a diagram of a specific embodiment of a flexible waveguide for a 60 GHz frequency band application. In this embodiment, the cross-sectional shape of the transition sections and the transmission line section is circular and the coupling sections are conical shaped. The transmission line has a length of I inch and an outer diameter of 0.112 inches. Note that this may be the outer dimension of the dielectric core or of the conductor.

Each of the transition sections has a length of 0.500 inches and a partial conical shape. At the transmission line end of the transition sections, each transition section has an outer diameter of 0.112 inches and has a 0.165-inch outer diameter at the coupling section end. Each of the coupling sections has a length of 0.120 inches and a base outer diameter of 0.165 inches.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. A device comprises:
a first section;
a second section;
a hinge section that couples the first section to the second section and allows the first section to be pivoted with respect to the second section;
an antenna located within the first section;
a radio wave transceiver section located in the second section; and
a waveguide assembly operable to provide coupling through at least a portion of the first section, at least a portion of the second section, and the hinge section such that the antenna is electrically coupled to the radio wave transceiver section.

2. The device of claim 1 further comprises:
a plurality of antennas that includes the antenna; and
a plurality of waveguide assemblies that includes the waveguide assembly, wherein the plurality of waveguide assemblies provides coupling through the at least a portion of the first section, the at least a portion of the second section, and the hinge section such that the plurality of antennas is electrically coupled to the radio wave transceiver section.

3. The device of claim 2, wherein the radio wave transceiver comprises:
compensation circuitry to compensate for impedance variations of one or more of the plurality of waveguide assemblies and/or impedance variations of one or more of the plurality of antennas.

4. The device of claim 1 further comprises:
a laptop computer where a display is located in the first section and a keyboard and motherboard are located in the second section;
a physical layer transceiver module located in the second section, wherein the physical layer transceiver module is operably coupled to the radiowave transceiver; and
a media access control (MAC) layer transceiver module located in the second section, wherein the MAC layer transceiver module is operably coupled to the physical layer transceiver module and is operably coupled to a bus structure of the motherboard.

5. The device of claim 1, wherein the waveguide assembly comprises:
a first waveguide operably coupled to the antenna, wherein the first waveguide is located within the first section;
a second waveguide operably coupled to the radio wave transceiver section, wherein the second waveguide is located in the second section; and
a flexible microstrip coupling the first waveguide to the second waveguide, wherein the flexible microstrip is located in the hinge section.

6. The device of claim 5 further comprises:
a housing that includes the antenna integrated therein;
the waveguide assembly further including:
a first transition coupler that couples the antenna to the first waveguide;
a second transition coupler that couples the second waveguide to the radio wave transceiver.

7. The device of claim 5, wherein the waveguide assembly further comprises:
a first transition coupled for coupling a first end of the flexible microstrip to the first waveguide; and
a second transition coupler for coupling a second end of the flexible microstrip to the second waveguide.

8. The device of claim 5, wherein the waveguide assembly further comprises at least one of:
the first and second waveguides having a rigid structure; and
the first and second waveguides having a flexible structure.

9. A waveguide assembly comprises:
a first waveguide for coupling to an antenna, wherein the antenna is located within a first section of a housing;
a second waveguide for coupling to a radiowave transceiver section, wherein the radiowave transceiver section is located in a second section of the housing; and
a flexible microstrip coupling the first waveguide to the second waveguide, wherein the flexible microstrip is located in a hinge section of the housing.

10. The waveguide assembly of claim 9 further comprises:
a first transition coupler that couples the antenna to the first waveguide; and
a second transition coupler that couples the second waveguide to the radio wave transceiver.

11. The waveguide assembly of claim 9 further comprises:
a first transition coupler for coupling a first end of the flexible microstrip to the first waveguide; and
a second transition coupler for coupling a second end of the flexible microstrip to the second waveguide.

12. The waveguide assembly of claim 9 further comprises at least one of:
the first and second waveguides having a rigid structure; and
the first and second waveguides having a flexible structure.

13. A waveguide comprises:
a transmission line section having a geometric shaped cross-section;
a transition section connected to the transmission line section, wherein the transition section has a non-uniformed geometric shaped cross-section comparable to the geometric shaped cross-section, wherein the non-uniformed geometric shaped cross-section facilitates impedance transformation; and
a coupling section connected to the transition section, wherein the coupling section has a mating geometric shaped cross-section.

14. The waveguide of claim 13 further comprises:
a second transition section connected to a second end of the transmission line section, wherein the second transition section has the non-uniformed geometric shaped cross-section; and
a second coupling section connected to the second transition section, wherein the second coupling section has the mating geometric shaped cross-section.

15. The waveguide of claim 13 further comprises:
each of the transmission line section, the transition section, and the coupling section including a dielectric core and a conductor plating at least partially encasing the dielectric.
